# EUROPEAN PATENT APPLICATION

(11) **EP 1 529 758 A1**
(43) Date of publication of application: **11.05.2005**
(21) Application number: 03788101.8
(22) Date of filing: 13.08.2003
(51) Int. Cl.: C02F 5/00

(54) **DISCHARGE APPARATUS**

(30) Priority: 15.08.2002 JP 2002236977; 30.08.2002 JP 2002255554
(71) Applicant: Ebara Corporation, Tokyo 144-8510 (JP)
(72) Inventor: OBO, Tadashi, Fujisawa-shi, Kanagawa 251-0032 (JP); KUNITOMO, Shinta, Fujisawa-shi, Kanagawa 252-0813 (JP); SUDA, Koji, Yokohama-shi, Kanagawa 235-0022 (JP); KURIHARA, Kathutoshi, Ohta-ku, Tokyo 144-0055 (JP); ANDO, Yasushi, Ohta-ku, Tokyo 144-0046 (JP)
(74) Representative: Emde, Eric
(86) International application number: PCT/JP2003/010308
(87) International publication number: WO 2004/016555

(57) **Abstract**

The present invention provides a discharge device, particularly a discharge device having a shock-absorbing mechanism which reduces sliding between electrodes and electrode holding parts due to a shock by discharge to reduce the frequency of electrode clearance adjustment in the discharge device in a liquid. The present invention also provides a discharge device having an electrode adjustment mechanism which can automatically adjust the electrode clearance, if required, without moving the discharge device from installed site thereof, which can easily continue stabilized discharge all the time, and which simultaneously has durability. One embodiment of the present invention provides a discharge device having a pair of electrodes and at least one of the above described plurality of electrodes having a shock-absorbing mechanism which absorbs or lessens the shock by discharge.

## Description

### TECHNICAL FIELD

The present invention relates to an improvement of a device for generating shock waves by performing discharge.

### BACKGROUND ART

In the discharge to instantaneously form a high temperature atmosphere, shock waves are sometimes generated with the discharge. When discharge is performed particularly in a liquid under a voltage condition of the dielectric breakdown voltage of the liquid or higher, it is known that enormous shock waves are instantaneously generated with the discharge. Use of these shock waves in fragmenting scales in piping or the like in a water treatment apparatus or the like is proposed (JP-A 2000-167591).

However, since the shock with discharge acts to broaden the electrode clearance (clearance between the electrodes), there has been a problem of sliding of the electrode holding part when the shock is enormous to broaden the electrode clearance enabling appropriate discharge or breaking the electrode holding part. Thus, in order to continue performing discharge, it has been necessary to frequently adjust the electrode clearance. Further, also there has been a problem of the deterioration of durability of constituting parts of the discharge device due to shocks or the like.

Further, by repetition of discharge, the electrodes come to wastage, and furthermore the electrode clearance is gradually broadened due to the repulsion force by shock waves. When the clearance between the electrodes exceeds a suitable range, the discharge ceases to be normally performed to remarkably reduce the effect by discharge. Accordingly, it is necessary to frequently adjust the electrode clearance in order to continuously perform stabilized discharge. When this adjustment is manually performed, the discharge device has to be moved from its installation site, and thus a lot of manpower and time is taken depending on the installation site of the discharge device to increase the time loss of the operation for the adjustment. Then, an automatic clearance adjustment mechanism having a screw feed mechanism is proposed but there has been a problem of durability such as breakage of the thread by repeated shock waves.

The present invention provides a discharge device having a novel constitution to solve these problems of the conventional discharge devices.

First, as a first problem to be solved, a first embodiment of the present invention provides a discharge device having a shock-absorbing mechanism which reduces sliding between an electrode and an electrode holding part due to a shock by discharge to reduce the frequency of adjustment of the electrode clearance, and a cross-sectional shape and an arrangement means of constituting parts which reduce an adverse effect on the device due to the shock by discharge.

Further, as a second problem to be solved, a second embodiment of the present invention provides a discharge device having an electrode clearance adjustment mechanism which can automatically adjust the electrode clearance, if required, without moving the discharge device from the installed site thereof, which can easily continue stabilized discharge all the time, and which simultaneously has durability.

### DISCLOSURE OF THE INVENTION

In order to solve the above described problems, in a first embodiment of the present invention, the discharge device is provided with a shock-absorbing mechanism which absorbs or lessens the shock by discharge.

Namely, the first embodiment of the present invention is to solve the above described problems by the following means.
1. A discharge device having a pair of electrodes, at least one of said pair of electrodes having a shock-absorbing mechanism which absorbs or lessens the shock by discharge.
2. The discharge device of the above described item 1, wherein the shock-absorbing mechanism is constituted by arranging the pair of electrodes in series in the vertical direction and rendering the electrode on the upper side movable in the vertical upward direction.
3. The discharge device of the above described item 1, wherein the shock-absorbing mechanism is constituted by forming a flexed part on the electrode.
4. The discharge device of the above described item 3, wherein a spirally flexed part is formed on the electrode.
5. The discharge device of the above described item 1, wherein the shock-absorbing mechanism is constituted of a shock-absorbing elastic material.
6. The discharge device of the above described item 5, wherein the shock-absorbing mechanism is constituted of an elastic shock-absorbing material having an ability to absorb a shock by deformation and, simultaneously, shape restorability.
7. The discharge device of the above described item 5 or item 6, wherein the shock-absorbing mechanism is constituted by holding at least one of the pair of electrodes by an electrode holding member having an electrode holding part formed of a shock-absorbing material.
8. The discharge device of the above described item 5 or item 6, wherein the shock-absorbing mechanism is constituted by connecting the opposed tips of the pair of electrodes with an elastic material having insulation properties and, simultaneously, shape restorability.
9. The discharge device of the above described item 5 or item 6, wherein the shock-absorbing mechanism is constituted in a manner such that at least one of the pair of electrodes is constituted of an electrode support part and an electrode tip, and the electrode support part is connected to the electrode tip with an elastic material having shape restorability.
10. The discharge device of the above described item 9, wherein the elastic material is an electrically conductive material.
11. The discharge device of the above described item 9 or item 10, wherein the electrode support part and the electrode tip are electrically connected with an conductor.
12. The discharge device of the above described item 5 or item 6 having a discharge vessel and a pair of electrodes, one end of the electrodes being arranged in the discharge vessel, other end of the electrode being arranged to be protruded outwardly of the discharge vessel, the shock-absorbing mechanism being constituted by holding at least one of the pair of electrodes by an electrode holding member and installing a shock-absorbing material between the electrode holding member and the discharge vessel.
13. The discharge device of any one of the above described item 1 to item 12, wherein at least part of the constituting parts is constituted of a constituting part having an approximately polygonal cross-sectional shape having an approximately streamlined or acute angular part.

The discharge device according to the present invention is particularly suited in use as a discharge device to be used in a liquid which performs discharge in the liquid to fragment scales and the like in the liquid passage piping by a shock wave to be generated by discharge.

### BRIEF EXPLANATION OF THE DRAWINGS

Fig. 1 is a schematic view showing one mode of a discharge device relating to the first embodiment of the present invention.
Fig. 2 is a schematic view showing the state immediately after discharge of a discharge device as shown in Fig. 1.
Fig. 3 is a schematic view showing another mode of the discharge device relating to the first embodiment of the present invention.
Fig. 4 is a schematic view showing another mode of the discharge device relating to the first embodiment of the present invention.
Fig. 5 is a diagram of a mode forming a spiral shock-absorbing part on an electrode in the discharge device relating to the first embodiment of the present invention.
Fig. 6 is a schematic view showing another mode of the discharge device relating to the first embodiment of the present invention.
Fig. 7 is a schematic view showing the state immediately after discharge of the discharge device as shown in Fig. 6.
Fig. 8 is a schematic view showing another mode of the discharge device relating to the first embodiment of the present invention.
Fig. 9 is a schematic view showing another mode of the discharge device relating to the first embodiment of the present invention.
Fig. 10 is a schematic view showing the mode of connecting an electrode support part to an electrode tip with a conductor in the discharge device as shown in Fig. 9.
Fig. 11 is a schematic view showing another mode of the discharge device relating to the first embodiment of the present invention.
Fig. 12 is a view showing concrete examples of cross-sectional shapes of constituting parts which can be preferably employed in the discharge device relating to the first embodiment of the present invention.
Fig. 13 is a schematic view showing a constitution example of the discharge device relating to the first embodiment of the present invention.
Fig. 14 is a schematic cross-sectional view showing one mode of the discharge device relating to a second embodiment of the present invention.
Fig. 15 is an explanatory diagram of a method of adjusting the electrode clearance of the discharge device as shown in Fig. 14.
Fig. 16 is an explanatory diagram of a method of adjusting the electrode clearance of the discharge device as shown in Fig. 14.
Fig. 17 is an explanatory diagram of a method of adjusting the electrode clearance of the discharge device as shown in Fig. 14.
Fig. 18 is a table showing the state of each constituting part (an electrode holder 35, a cylinder 37 and a pusher 41) in each state of action in the electrode clearance adjustment mechanism 50 of the discharge device relating to the present invention as shown in Fig. 14 to Fig. 17.
Fig. 19 is a schematic cross-sectional diagram showing another mode example of the discharge device relating to the second embodiment of the present invention.
Fig. 20 is an explanatory diagram of a method of adjusting the electrode clearance of the discharge device as shown in Fig. 19.
Fig. 21 is an explanatory diagram of a method of adjusting the electrode clearance of the discharge device as shown in Fig. 19.
Fig. 22 is an explanatory diagram of a method of adjusting the electrode clearance of the discharge device as shown in Fig. 19.
Fig. 23 is an explanatory diagram of a method of adjusting the electrode clearance of the discharge device as shown in Fig. 19.
Fig. 24 is an explanatory diagram of a method of adjusting the electrode clearance of the discharge device as shown in Fig. 19.
Fig. 25 is a table showing the state of each constituting part (a first electrode holder 35-1, a second electrode holder 35-2, a first cylinder 37-1 and a second cylinder 37-2) in each state of action of the electrode clearance adjustment mechanism 50 in the discharge device relating to the present invention as shown in Fig. 19 to Fig. 24.
Fig. 26 is a schematic cross-sectional diagram showing another mode example of the discharge device relating to the second embodiment of the present invention.
Fig. 27 is a schematic cross-sectional diagram showing another mode example of the discharge device relating to the second embodiment of the present invention.
Fig. 28 is an explanatory diagram of a method of adjusting the electrode clearance of the discharge device relating to the present invention as shown in Fig. 27.
Fig. 29 is an explanatory diagram of a method of adjusting the electrode clearance of the discharge device relating to the present invention as shown in Fig. 27.
Fig. 30 is an explanatory diagram of a method of adjusting the electrode clearance of the discharge device relating to the present invention as shown in Fig. 27.
Fig. 31 is a schematic cross-sectional diagram showing another mode example of the discharge device relating to the second embodiment of the present invention.

The gist of the discharge device relating to the first embodiment of the present invention will now be explained below.

In the first embodiment of the present invention, by providing at least one of the pair of electrodes which constitute a discharge device with a shock-absorbing mechanism, the impact energy caused on the discharge electrodes is converted into potential energy, kinetic energy or elastic deformation energy to absorb or lessen it. For example, a shock-absorbing mechanism can be constituted by arranging a pair of electrodes in series in the vertical direction and rendering the electrode on the upper side movable in the vertical upward direction. According to this mechanism, the electrode on the upper side as such jumps up by the shock caused by discharge to absorb the shock. Further, the shock-absorbing mechanism can be constituted by forming a flexed part in the form of a spiral or the like on the electrode as such to absorb the shock by the elastic deformation of the flexed part.

Further, the shock-absorbing mechanism can be constituted of a shock-absorbing material. As the shock-absorbing material, the one that absorbs the shock by deformation can be utilized and the elastic shock-absorbing material simultaneously having shape restorability is more suitably used. According to this constitution, by the instantaneous deformation of the shock-absorbing material, the shock caused by discharge is absorbed, and thereafter the shock-absorbing material returns to its original shape of itself to restore the electrode clearance to its original distance, and thus discharge can be continually performed.

Further, in at least one of the pair of electrodes, the shock-absorbing material can be arranged at least one position between the electrode holding member and the electrode or between the electrode holding member and the discharge vessel. Furthermore, in combination of the above described shock-absorbing mechanism, the cross-sectional shape of the constituting parts and their arrangement which prevent the deterioration of durability of the constituting parts of the discharge device due to the shock can be employed. According to the first embodiment of the present invention, the shock by discharge can be absorbed or lessened by the shock-absorbing mechanism to reduce the deviation of the electrode positions due to sliding between the electrode and the electrode holding member, and accordingly the frequency of adjusting the electrode clearance can be reduced. By this, the power charges and the labor of adjusting the electrode clearance can be economized, and furthermore the number of discharging per unit time can be increased to enable more effective discharge treatment. Further, by contriving the cross-sectional shape and the arrangement of constituting parts, the durability of the device even with comparatively inexpensive materials can be improved to economize the device cost and maintenance cost.

Next, various actual modes of the discharge device relating to the first embodiment of the present invention will be explained in detail based on the drawings.

In the drawings, constituting elements having the same functions are shown by the same numerals.

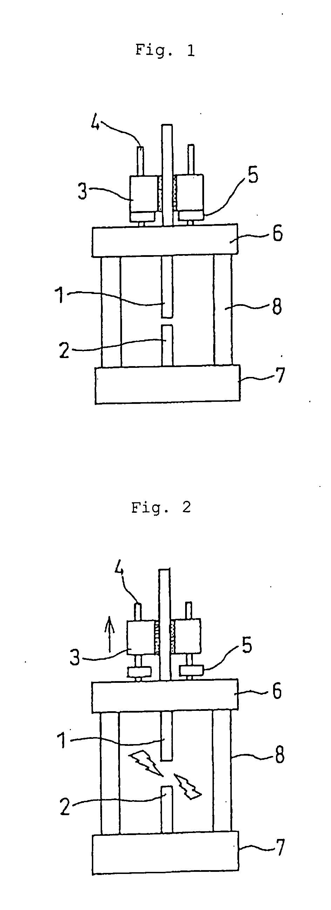

Fig. 1 is a schematic explanatory diagram showing a mode example of the discharge device relating to the first embodiment of the present invention. In the device shown in Fig. 1, an upper electrode 1 and a lower electrode 2 are arranged in series in the vertical direction. As other constituting elements, there are an electrode holding members 3, a guide pillar 4, an electrode clearance adjustment member 5, an upper support stand 6, a lower support stand 7 and a support pillar 8. The lower electrode 2 is fixed to the lower support stand 7, and the upper electrode 1 is held by the electrode holding member 3, and the lower side of the holding member 3 is laid on the upper side of the electrode clearance adjustment member 5. By this constitution, the upper electrode 1 is held in the state suspended by the electrode holding member 3 in keeping a specified distance from the tip of the lower electrode 2. The electrode holding member 3 is not fixed and is movable in the vertical direction alone along the guide pillar 4. The upper support stand 6 and the lower support stand 7 are connected by the support pillar 8.

Fig. 2 shows the state immediately after discharge in the discharge device of Fig. 1. The electrode holding member 3 jumps up while holding the upper electrode 1 on getting shocked by discharge to absorb the gotten shock. Thereafter, the electrode holding member 3 falls by gravity and the lower side of the electrode holding member 3 is laid on the upper surface of the electrode clearance adjustment member 5. Thus the electrode clearance returns to the original set value and discharge can be continued. When the position of the upper side of the electrode clearance adjustment member 5 is rendered adjustable by, for example, providing thread chasing on the outer periphery of the guide pillar 4, the electrode clearance becomes adjustable.

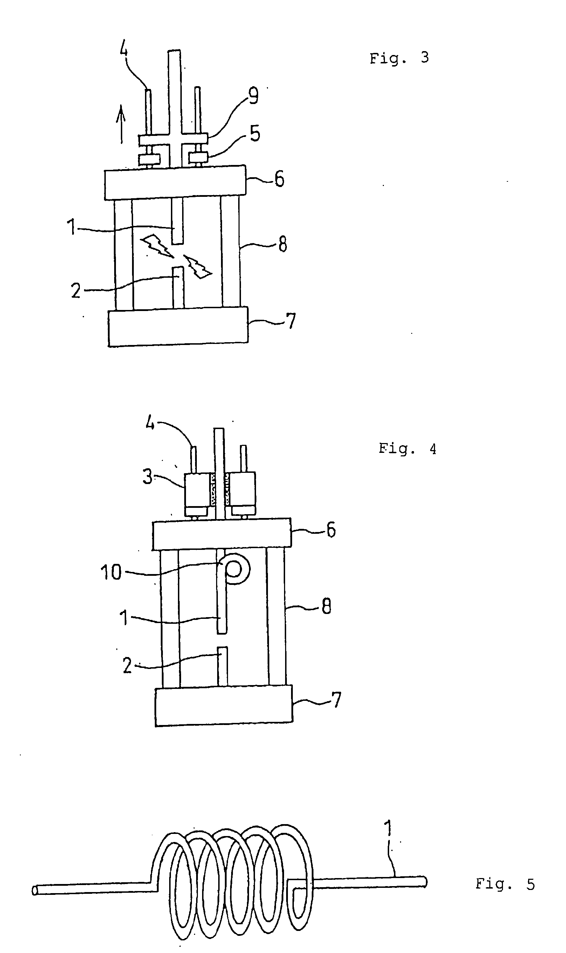

Fig. 3 shows an example in which a projection 9 to be made abut to the electrode clearance adjustment member 5 is provided on the upper electrode 1. According to this embodiment, the electrode holding part 3 can be omitted.

In Fig. 4, as another mode example of the first embodiment of the present invention, an example in which a flexed part 10 which functions as a shock-absorbing part is formed on the upper electrode 1 as such is shown. According to this mode, since the shock by discharge is absorbed at the flexed part 10 of the upper electrode 1, the sliding between the electrode holding member 3 and the electrode 1 is reduced.

In addition, the present invention also includes an embodiment in which a spiral shock- absorbing part is formed on the above described electrode 1 as shown in Fig. 5. In Fig. 5, this spiral shock-absorbing part is horizontally shown because of limited space of paper.

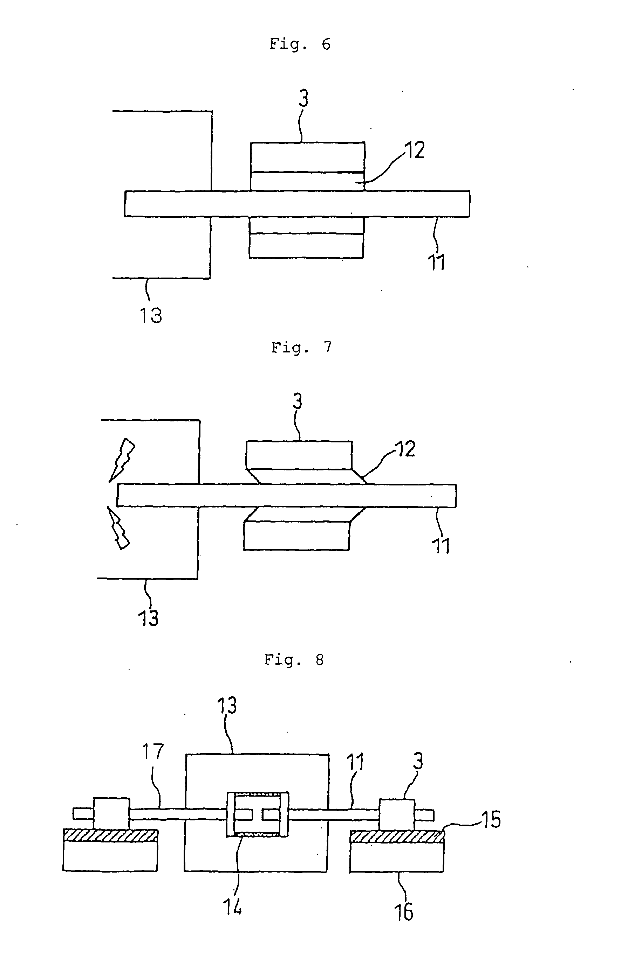

Fig. 6 shows another mode example of the discharge device relating to the first embodiment of the present invention. In the mode example as shown in Fig. 6, by holding the part of the electrode 11 protruded outwardly of the discharge vessel 13 by an electrode holding member 3 and constituting the holding part 12 of the electrode holding member 3 of an elastic material having shape restorability such as a rubber, a rubber tube and a sponge, holding of the electrode and absorption of the shock caused on the electrode by discharge are simultaneously effected. As the rubber, a foamed rubber and a silicone rubber which have both some hardness and elasticity are preferably used, and a rubber made hollow such a rubber tube is more preferably used. As to the sponge and gel as well, those having hardness to some extent are preferred from the standpoint of holding.

Fig. 7 shows the state immediately after discharge in the discharge device as shown in Fig. 6. The shock caused on the electrode 11 by discharge is absorbed by the deformation of the holding part 12 of the holding member 3. Thereafter, the holding member 3 returns to the state as shown in Fig. 6 by the shape restorability of the holding part 12, and accordingly the electrode clearance also returns to its original state to enable discharge again. According to this constitution, the sliding between the electrode holding member 3 and the electrode 11 due to the shock is reduced by the deformation of the holding part 12 to absorb the shock, and thus the electrode holding member 3 may be fixed to the discharge vessel 13.

Fig. 8 shows another mode example of the discharge device relating to the first embodiment of the present invention. In the device as shown in Fig. 8, an electrode 11 and the opposed pairing electrode 17 are connected in the discharge vessel 13 by a shock-absorbing member 14 composed of an elastic material having insulation properties and shape restorability to absorb the shock acting on both electrodes by the deformation of the shock-absorbing member 14. After deformation of the shock-absorbing member 14, the electrode clearance between the electrode 11 and the pairing electrode 17 returns again to the original distance by the shape restorability of the shock-absorbing member 14, and thus discharge can be continued. The electrode holding member 3 is not fixed to the discharge vessel 13 and is placed on a pedestal 16 having a sliding surface 15 in the mode as shown in Fig. 8. As the elastic material constituting the shock-absorbing member 14, a spring, a rubber, an air pressure suspension, a water pressure suspension, a hydraulic (water or oil pressure) suspension, a gel, a plastic and the like can be utilized. As the spring, a coil spring made of a plastic is preferred. As the rubber and gel, the ones that have hardness to some extent are preferred, and a hard rubber, a silicone gel and the like are more preferred. Since the electrode holding member 3 and the electrode 11can integrally move on the sliding surface 15, the sliding between the electrode holding members and the electrodes due to the shock is reduced. For the sliding surface 15 on the pedestal 16, a lubrication mechanism such as a roller, a bearing and a lubricating oil or a mechanism which reduces frictional resistance such as air floatation and magnetic floatation can be utilized. A structure of holding the electrode as such through the lubrication mechanism or the frictional resistance-reducing mechanism does not require the electrode holding member 3.

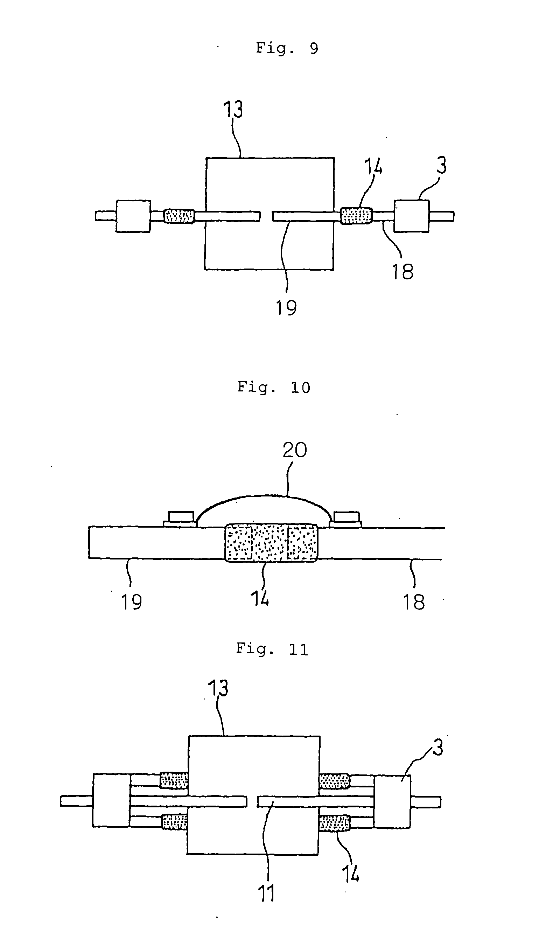

Fig. 9 shows another mode example of the discharge device relating to the first embodiment of the present invention. The discharge device as shown in Fig.9 has electrode holding members 3, a discharge vessel 13, shock-absorbing materials 14, electrode support parts 18 and electrode tips 19. The same shock-absorbing member 14 as shown in Fig. 8 is arranged between the electrode support part 18 and the electrode tip 19 to hold the electrode support part 18 and the electrode tip 19 in a separated manner. The shock caused on the electrode tips 19 by discharge is absorbed by the shock-absorbing members 14. Also in this instance, a spring or the like can be used as the shock-absorbing member 14, and it is preferred that the shock-absorbing member 14 as such has electrical conductivity, and thus the one made of a metal is preferred, and it is preferred that the shape is of a coil spring. As the rubber and gel, those having hardness to some extent are preferred and a hard rubber and a silicone gel are preferred. When the shock-absorbing member 14 is an insulating material or the electrical conductivity of the shock-absorbing member 14 is insufficient, it is possible to connect a conductor from an electric power source directly to the electrode tip 19 or, as shown in Fig. 10, to arrange a conductor 20 between the electrode tip 19 and the electrode support part 18 to electrically connect the separated electrode tip 19 and the electrode support part 18.

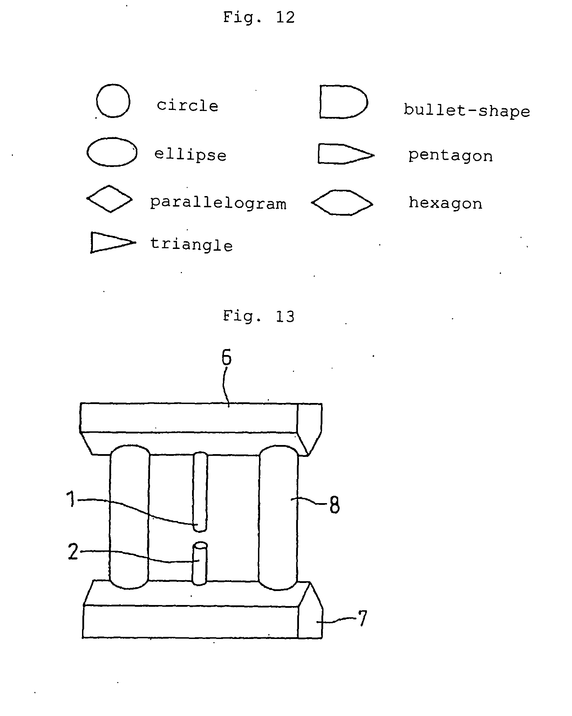

Fig. 11 shows another mode example of the discharge device relating to the first embodiment of the present invention. The electrodes 11 are held by the electrode holding members 3, and a shock-absorbing members 14 are installed between the electrode holding members 3 and the discharge vessel 13. The shock caused on the electrode 11 by discharge is absorbed by the shock-absorbing members 14 through the electrode holding members 3. When it is difficult to support the electrode holding members 3 with the discharge vessel 13, it is also possible to provide the exclusive use of a pillar or the like in the neighborhood of the discharge vessel to allow the support pillar to support the holding members 3 through the shock-absorbing members.

In the discharge device relating to the first embodiment of the present invention, the above described shock-absorbing mechanism is provided, and furthermore at least part of the cross-sectional shape of constituting parts of the discharge device can be rendered an approximately polygonal shape having an approximately streamlined or acute angular part which is hard to be susceptible to the affect of a shock. Fig. 12 shows examples of cross-sectional shapes of constituting parts which are less susceptible to the affect of a shock. The approximately streamlined shapes include, for example, shapes having a curved line such as a circle, an ellipse and a bullet-shape, and shapes having an acute angle include, for example, a triangle, a parallelogram, a pentagon and a hexagon. When the constituting parts having such cross-sectional shapes are installed in the discharge device, it is preferred to install them so as to direct the narrowed portion in the case of the approximated streamlined shape of the cross-section, and to direct the acute portion in the case of the approximately polygonal shapes, to respective discharge points.

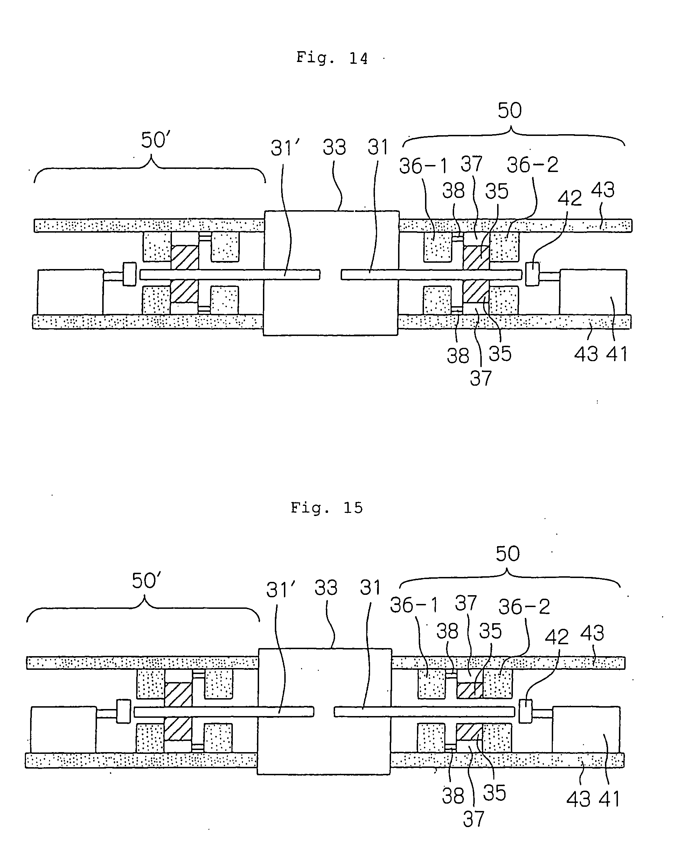

Fig. 13 shows an example in which pillar 8 is constituted by a member having an elliptical cross-section shape and the upper support stand 6 and the lower support stand 7 are constituted by a member having a pentagonal cross-sectional shape. In this example, the direction of the longer diameter of the elliptical pillars and the acute angular part of the pentagon are preferably arranged directed to discharge points.

Further, the present invention has another object to provide a discharge device having an electrode clearance adjustment mechanism which can automatically control the electrode clearance, if required, without moving the discharge device from its installation site and which is capable of easily continuing stabilized discharge all the time and simultaneously having durability. As the means to achieve this object, the second embodiment of the present invention provides a discharge device having a pair of electrodes and an electrode clearance adjustment mechanism which is constituted by attaching to at least one of the above described electrodes, an electrode holder to hold and release the electrode, a driving mechanism which moves the electrode holder, a stopper to control the movement position of the electrode holder, the electrode clearance adjustment mechanism controlling the distance of the electrode from the other electrode by moving the electrode held by the electrode holder to the position regulated by the stopper. In adjusting the spacing distance between electrodes by this mechanism, by previously making the tips of both electrodes abut to each other by a means to make both electrodes abut to each other and moving the electrode held by the electrode holder in the contact state to a position regulated by the stopper, the spacing distance can be precisely adjusted.

Further, the electrode clearance adjustment mechanism can be constituted of a plurality of sets of an electrode holder and a driving mechanism which allows the plurality of electrode holders to hold and release the electrode at a plurality of positions to move and let out the position of the electrode.

The second embodiment of the present invention also provides a discharge device having a pair of electrodes arranged in series in the upward and downward directions and an electrode clearance adjustment mechanisms which is constituted of an electrode holder to hold and release the electrode installed on the upper side and a driving mechanism to allow the electrode holder to ascend in the upward direction to a predetermined distance, and which functions to separate the electrode on the upper side from the electrode on the lower side to the predetermined distance by releasing the electrode holder to allow the electrode on the upper side to descend by gravity to make it abut to the other electrode installed on the lower side, and subsequently holding the electrode on the upper side by the electrode holder to allow the electrode holder to ascend to the predetermined distance. In this case, utilization of gravity as the means to make both electrodes abut to each other can reduce the power to be used and makes control as well easy.

In the above explained discharge device, the driving mechanism which moves the electrode holder can be constituted of a mechanism driven by a liquid pressure or a gas pressure. By employing this mechanism, the durability against electrical noise to be generated by discharge or the like can be improved to reduce malfunctioning. In the case of using the liquid pressure, an oil and water are typically used as the pressure medium and may be properly used depending on the use environment. For example, when the discharge device is used in a lake, a marsh, a river or in the sea, water pressure is preferred, and an anti-freeze may be added to an aqueous medium of water pressure when the device is used at low temperatures. In the case of using the gas pressure, air, an inert gas and the like which are non-explosive and nonflammable gases are preferably used.

Furthermore, the second embodiment of the present invention also provides
a discharge device having a pair of electrodes and an electrode clearance adjustment mechanism which is constituted by attaching to at least one of the above described electrodes, a roller conveyor to hold and feed the electrode and a driving mechanism which drives the roller conveyor, and which functions to adjust the spacing distance of the electrode from the other electrode by moving the electrode held by the roller conveyor. As the roller conveyor to be used in this case, the one that holds the electrode between one or more sets of roller conveyors, that can freely let out the electrode by a driving source, and that can hold the electrode so as not to carelessly move it when the roller conveyors are stopped, may be used. The electrode is held from two or more directions, and in order to improve holding stability, holding from three or more directions is preferred.

Each concrete mode of the second embodiment of the present invention is as follows.
14. A discharge device having a pair of electrodes and an electrode clearance adjustment mechanism which is constituted by attaching to at least one of said electrodes, an electrode holder to hold and release the electrode, a driving mechanism to move the electrode holder and a stopper to regulate the movement position of the electrode holder, and which functions to adjust the spacing distance from the other electrode by moving the electrode held by the electrode holder to the position regulated by the stopper.
15. The discharge device of the above described item 14, wherein a plurality of sets of an electrode holder and a driving mechanism to move the electrode holders are arranged and the electrode clearance adjustment mechanism allows the plurality of electrode holders to hold and release the electrodes at a plurality of positions to move the electrodes.
16. A discharge device having a pair of electrodes installed in series in the upward and downward directions and an electrode clearance adjustment mechanism which is constituted of an electrode holder to hold and release the electrode installed on the upper side and a driving mechanism to allow the electrode holder to ascend in the upward direction to a predetermined distance, and which functions to separate the electrode on the upper side from the other electrode on the lower side to the predetermined distance by releasing the electrode holder to allow the electrode on the upper side to descend by gravity to make it abut to the other electrode installed on the lower side, and then holding the electrode on the upper side by the electrode holder to allow the electrode holder to ascend to a predetermined distance.
17. A discharge device having a pair of electrodes and an electrode clearance adjustment mechanism which is constituted by attaching to at least one of the above described electrodes, a roller conveyor to hold and feed the electrode and a driving mechanism to drive the roller conveyor, which functions to adjust the spacing distance from the other electrode by moving the electrode held by the roller conveyor.
18. The discharge device of any one of the above described items 14 to 17, wherein the driving mechanism is driven by a liquid pressure or a gas pressure.

Various concrete modes of the discharge device relating to the second embodiment of the present invention will now be explained in detail by reference to the drawings.

Fig. 14 is a schematic cross-sectional diagram (schematic view) showing one mode example of the discharge device relating to the second embodiment of the present invention. As shown in Fig. 14, the discharge device has a pair of bar electrodes 31 and 31' whose tips are separately opposed with a predetermined clearance (an optimum clearance for discharge), a discharge vessel 33 for housing the opposed tips of the above described electrodes 31 and 31' and electrode clearance adjustment mechanisms 50 and 50' which are installed on both sides of the discharge vessel 33 and hold and move the portions of both electrodes 31 and 31' protruded outwardly of the discharge vessel 33. Preferably, a discharge device in a liquid is constituted by filling the discharge vessel 33 with the liquid, which performs discharge in the liquid to fragment scales and the like in liquid passage piping by shock waves to be generated by discharge. In the following explanation, the embodiment using a discharge device in a liquid obtained by filling the discharge vessel 33 with a liquid will be explained.

Each of the electrode clearance adjustment mechanisms 50 and 50' is symmetrical in the shape and structure. In the following, the electrode clearance adjustment mechanism 50 on the right will be explained. In the following explanation, "front" means the side of the discharge vessel 33 viewed from a cylinder 37 as will be explained below and "rear" means the side of a pusher 41 viewed from the cylinder 37. In the electrode clearance adjustment mechanism 50, stoppers 36-1 and 36-2 are fixed to two front and rear positions on the opposed surfaces of the upper and lower stands 43, respectively, and the cylinder 37 is housed between two stoppers 36-1 and 36-2 and a toroidal electrode holder 35 is fixed and integrated on the inner side of the cylinder 37, and furthermore, a pusher 41 is installed at the rear side of the rear stopper 36-2. The cylinder 37 is installed movably in the forward and backward directions between the stopper 36-1 and 36-2. The cylinder 37 is constituted to eject a shaft 38 in any one of the front and rear directions, to thereby be driven in the opposite direction of ejection of the shaft 38. Fig.14 shows the state of the cylinder 38 which ejects the shaft 38 in the front direction to thereby be moved to the position to abut to the rear stopper 36-2. The electrode holder 35 fixed on the inner side of the cylinder 37 is moved in the front or rear direction in accordance with this movement of the cylinder 37 in the front or rear direction. As the driving source to eject the shaft 38 from the cylinder 37, a liquid pressure such as a hydraulic pressure and an oil pressure, a gas pressure and, in addition, an electromagnetic force and the like may be used. The cylinder 37 is constituted to eject the shaft 38 in any one of the front and rear directions to thereby be moved to the position to abut to either of the stoppers 36-1 and 36-2 and to take either one of these two positions (two-position control). With this movement of the cylinder 37 in the front or rear direction, the electrode holders 35 is also moved forward or backward to the position to abut to the stopper 36-1 or 36-2 together with the cylinder 37 and takes either one of these two positions. The electrode holder 35 is constituted of a hollow toroidal rubber holder and holds the periphery of the above described electrode 31 by injecting a fluid such as a liquid and a gas into its inside of the electrode holder. The driving source for the electrode holder 35 may be constituted of the one using a liquid pressure such as a hydraulic pressure and an oil pressure, a gas pressure and, in addition, and an electromagnetic force or the like. The pusher 41 has a pressing part 42 at the position opposed to the rear end surface of the electrode 31 and is moved forward by ejecting the pressing part 42 forward to press the rear end of the electrode 31 and to move the electrode 31 forward. As the driving source for the pusher 41, a liquid pressure such as a hydraulic pressure and an oil pressure, a gas pressure and, in addition, an electromagnetic force and the like can also be used.

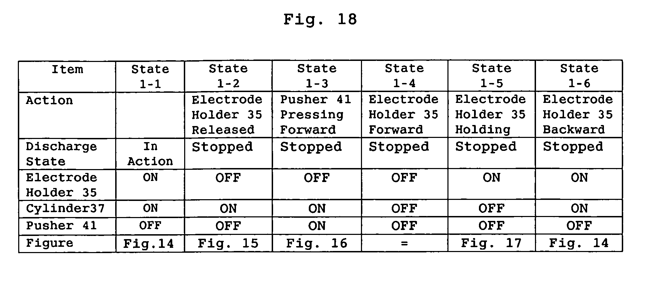

Next, by reference to Fig. 14 to Fig. 17, the step of adjusting the electrode clearance of the discharge device relating to the second embodiment of the present invention as shown in Fig. 14 will now be explained. Fig. 14 shows the state of the discharge device on the normal discharge. Fig. 15 to Fig. 17 are explanatory diagrams of a method of adjusting the electrode clearance of the discharge device by using the electrode clearance adjustment mechanism 50. Fig. 18 shows the state of each part (an electrode holder 35, a cylinder 37 and a pusher 4) in each state of action of the electrode clearance adjustment mechanism 50. The Figure number as shown in the last line of Fig. 18 (table) shows the number of the figure (Fig. 14 to Fig. 17) which shows each state. In Fig. 18 and the following explanation, "ON" of the electrode holder 35 means "to hold the electrode 31 by the electrode holder 35", and "OFF" means "to open the electrode holder 35 to movably release the electrode 31". "ON" of the cylinder 37 means "to eject the shaft 38 forward to make the rear end of the cylinder 37 abut to the stopper 36-2", and "OFF" means "to eject the shaft 38 backward to make the front side of the cylinder 37 abut to the stopper 36-1. "ON" of the pusher 41 means "to eject the pressing part 42 forward to push the rear end of electrode 31 forward", and "OFF" means "to allow the pressing part 42 to retreat backward to be in the state of not pushing the rear end of the electrode 31".

When the discharge device relating to the present invention is in the state of the normal discharge as shown in Fig. 14, the electrode holder 35 is rendered "ON" to hold the electrode 31 as shown in "State 1-1" in Fig. 18; that is, the shaft 38 is ejected toward the discharge vessel 33 so that the cylinder 37 is moved backward. When a voltage of the dielectric breakdown voltage of the liquid in the discharge vessel or higher is applied between the electrodes 31 and 31' in this state to effect discharge, enormous shock waves and the like are generated to fragment and remove scales, rust and the like adhering to the inside of the discharge vessel 33 or to prevent adhesion of scales, rust and the like to the inside of the discharge vessel 33.

On repetition of the discharge between the electrodes 31 and 31', the clearance between the tips of the electrodes 31 and 31' (electrode clearance) is gradually broadened not only by the wastage (or consumption) of electrodes but also the sliding of electrode caused by the repulsion force due to the shock waves. When the clearance between the tips of the electrodes 31 and 31' exceeds an appropriate range and normal discharge ceases to be performed to remarkably deteriorate the effect of discharge, the discharge is stopped and the clearance between the electrodes 31 and 31' are appropriately adjusted using the electrode clearance adjustment mechanism 50 according to the present invention.

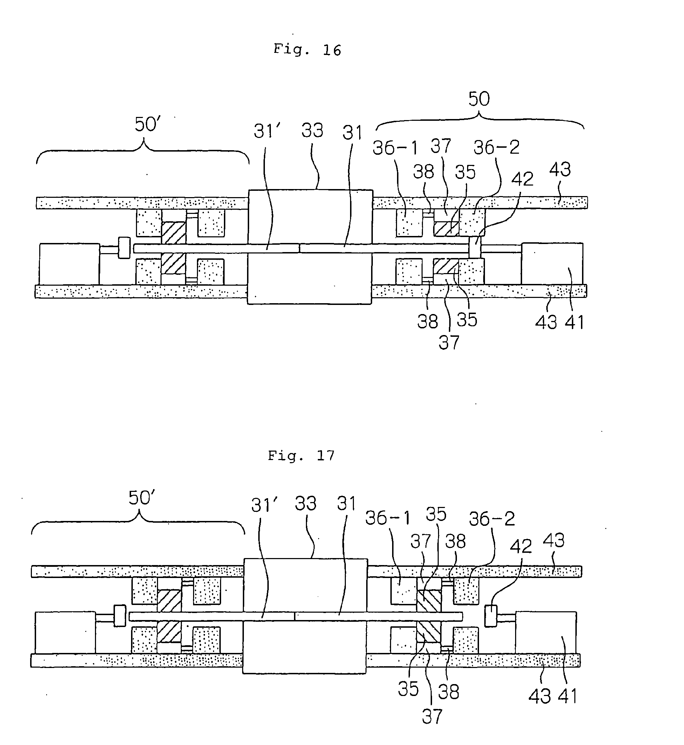

First, discharge is stopped, and as shown in Fig. 15 ("State 1-2" in Fig. 18), the electrode holder 35 is rendered "OFF" and the electrode 31 is released and made freely movable in the front or rear direction. Next, as shown in Fig. 16 ("State 1-3" in Fig. 18), the pusher 41 is rendered "ON" to press the rear end of the electrode 31 forward, and the electrode 31 is pushed until its tip abuts to the tip of the other opposed electrode 31'. Then, the pusher 41 is rendered "OFF" and allowed to retreat, and simultaneously the cylinder 37 is rendered "OFF" and the shaft 38 is ejected in the direction to the stopper 36-2 (that is, in the rear direction) to move the cylinder 37 forward (in the direction to the discharge vessel 33) ("State 1-4" in Fig.18). Then, as shown in Fig. 17 ("State 1-5" in Fig. 18), the electrode holder 35 is rendered "ON" to hold the electrode 31. Subsequently, the cylinder 37 is rendered "ON" and the shaft 38 is ejected in the (front) direction of the stopper 36-1 to move the cylinder 37 backward and the electrode holder 35 is returned to the original position as shown in Fig. 14 ("State 1-6" in Fig. 18). By this operation, the clearance between the electrodes 31 an 31' is appropriately adjusted. According to this constitution, the clearance between the electrodes 31 and 31' after adjustment is preset as the distance of movement of the cylinder 37 between the stoppers 36-1 and 36-2, and accordingly the preset value of the electrode clearance can be adjusted in accordance with the positions of the stoppers 36-1 and 36-2. As described above, according to this mode, the pusher 41, the electrode holder 35, the cylinder (driving mechanism) 37 and the stoppers 36-1 and 36-2 constitute the electrode feeding mechanism capable of controlling the electrode positions.

The electrode clearance adjustment mechanism 50 may function when it is installed on at least any one of the electrodes 31 and 31', but as in the mode as shown in Fig. 14 to Fig. 17, the electrode clearance adjustment mechanisms may be installed on both electrodes 31 and 31' and may be alternately operated. Further, in this mode, the electrode holder 35 is held by the upper and lower cylinders 37 but the cylinders 37 may be one, and further three or more cylinders may be installed on the periphery of the electrode holder 35.

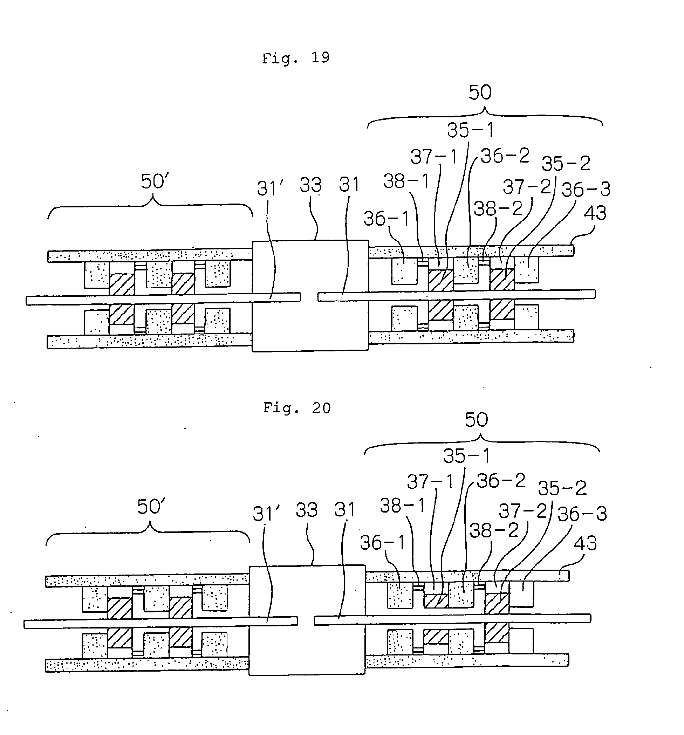

Fig. 19 is a schematic cross-sectional diagram (schematic view) showing another mode of the discharge device relating to the second embodiment of the present invention. In this mode, the same numerals are affixed to the same or corresponding constituting elements as in the mode as shown in Fig. 14 and their detailed explanation is omitted. In the mode as shown in Fig. 19, the point which differs from the mode as shown in the above described Fig. 14 is that a stopper 36-3 on the rear side of the stopper 36-2 instead of the pusher 41, a second cylinder 37-2 between the stoppers 36-2 and 36-3, and a second electrode holder 35-2 on the inner side of the second cylinder 37-2, are further installed. The elements corresponding to the cylinder 37 and the electrode holder 35 in Fig. 14 are called as a first cylinder 37-1 and a first electrode holder 35-1 in Fig. 19, respectively. In other words, in the mode as shown in Fig. 19, two sets of cylinders 37-1 and 37-2 and electrode holders 35-1 and 35-2 which have the same structures are installed to constitute an electrode feeding mechanism.

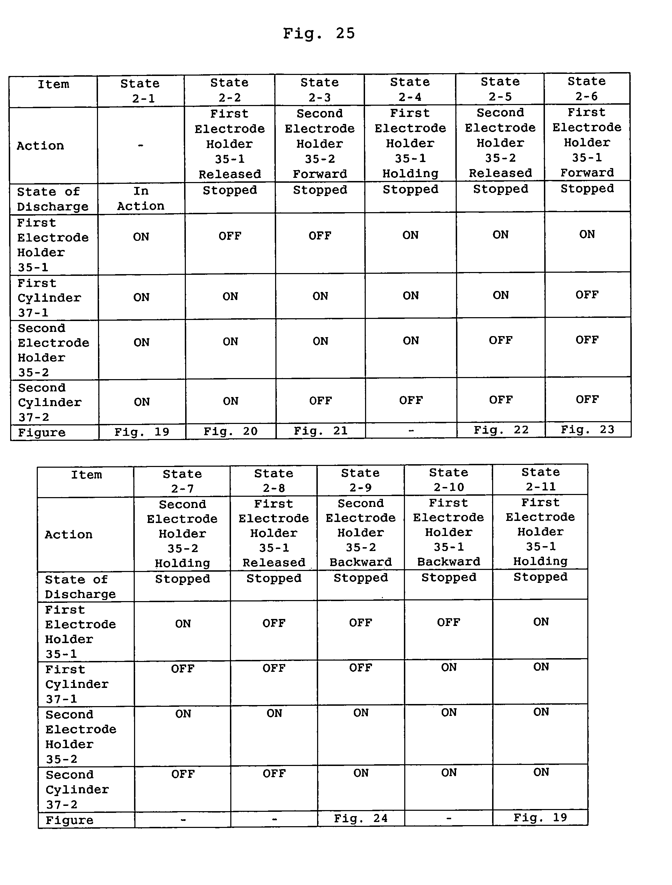

Fig. 19 shows the normal discharge state of the discharge device relating to the present invention. Further, Fig. 20 to Fig. 24 are explanatory diagrams of a method of adjusting the electrode clearance of the discharge device with the use of one side of the electrode clearance adjustment mechanisms 50. Fig. 25 is a table showing the state of each part (a first electrode holder 35-1, a second electrode holder 35-2, a first cylinder 37-1 and a second cylinder 37-2) in each state of action of the electrode clearance adjustment mechanism 50. The Figure number as shown in the last line in Fig. 25 (table) shows the number of the Figure (Fig. 19 to Fig. 24) which shows each state. In Fig. 25, "ON" and "OFF" of the first electrode holder 35-1, the second electrode holder 35-2, the first cylinder 37-1 and the second cylinder 37-2 shows the same meaning as explained with respect to Fig. 18.

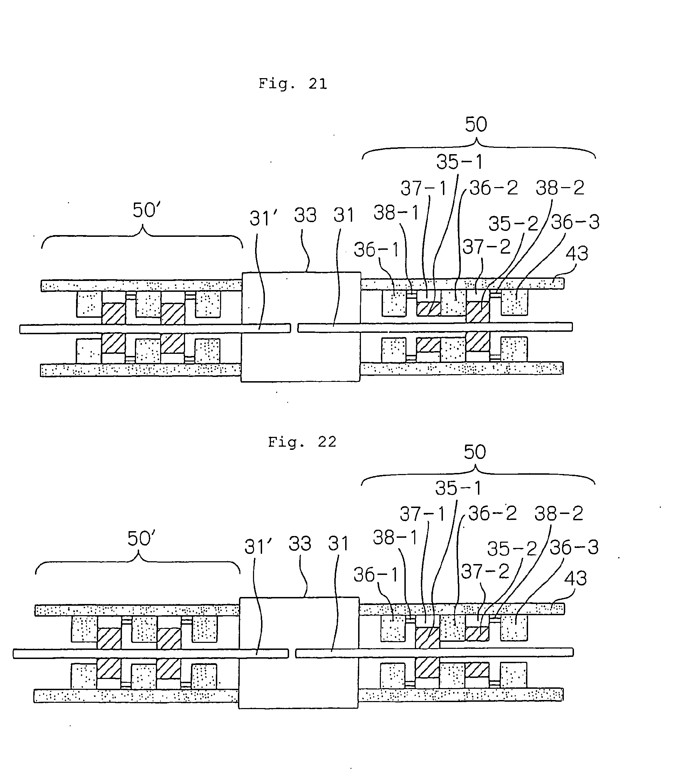

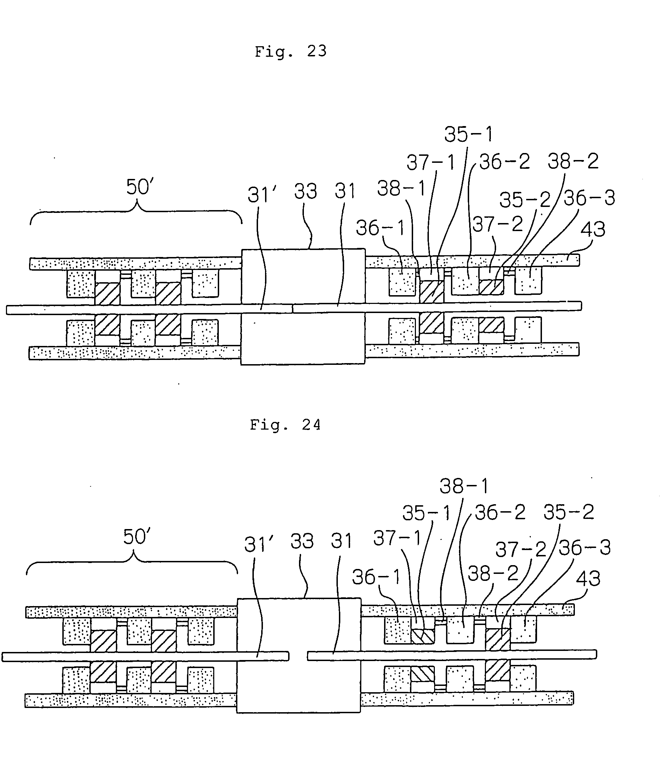

When the discharge device relating to the present invention is in the normal discharge state as shown in Fig. 19, as shown in "State 2-1" in Fig. 25, the first electrode holder 35-1, the second electrode holder 35-2, the first cylinder 37-1 and the second cylinder 37-2 are all "ON" and the first electrode holder 35-1 abuts to the rear stopper 36-2 and holds the electrode 31, and the second electrode holder 35-2 abuts to the rear stopper 36-3 and holds the electrode 31. In this state, by applying a voltage of the dielectric breakdown voltage of the liquid in the discharge vessel 33 or higher between the tips of the electrodes 31 and 31' to effect discharge, enormous shock waves and the like are generated, and scales, rust and the like adhering to the inside of the discharge vessel 33 can be fragmented and removed or adhesion of scales, rust and the like to the inside of the discharge vessel 33 can be prevented. When the clearance between the tips of the electrodes 31 and 31' is broadened by both the wastage of the electrodes and sliding of the electrodes due to the repulsion force on repetition of discharge between the electrodes, the discharge is stopped and the first electrode holder 35-1 alone is rendered "OFF" and releases the electrode 31 as shown in Fig. 20 ("State 2-2" in Fig. 25). Then, as shown in Fig. 21, the second cylinder 37-2 is rendered "OFF" to move the second electrode holder 35-2 forward while holding the electrode 31, and the electrode 31 is pushed forward (in other words, toward the opposed electrode 31') ("State 2-3" in Fig. 25). Herein, the electrode 31 is moved forward until the second cylinder 37-2 abuts to the front stopper 36-2. Subsequently, the electrode holder 35-1 is rendered "ON" to hold the electrode 31 ("State 2-4" in Fig. 25), and then as shown in Fig. 22, the second electrode holder 35-2 is rendered "OFF" to release the electrode 31 ("State 2-5"). Next, as shown in Fig. 23, the first cylinder is rendered "OFF" to move the cylinder 37-1 forward, and the electrode 31 is pushed forward while holding the electrode 31 by the electrode holder 35-1, whereby the tip of the electrode 31 abuts to the tip of the opposed electrode 31' and the cylinder 37-1 is stopped in the middle of pushing the electrode 31 ("State 2-6"). Then, the second electrode holder 35-2 is rendered "ON" to hold the electrode 31 ("State 2-7") and the first electrode holder 35-1 is rendered "OFF" to release the electrode 31 ("State 2-8"). Next, as shown in Fig. 24, the second cylinder 37-2 is rendered "ON" and is moved backward, whereby the electrode 31 is moved backward with the second electrode holder 35-2 and the tips of both electrodes 31 and 31' are drawn apart ("State 2-9). Since the clearance between the electrodes 31 and 31' is preset as the distance which the second cylinder 37-2 (in other words, the second electrode holder 35-2) between the stoppers 36-2 and 36-3 can move, the preset value of the clearance between the electrodes can be adjusted in accordance with the positions of the stoppers 36-2 and 36-3. Finally, the first cylinder 37-1 is rendered "ON" to move it in the direction to the stopper 36-2 (in other words, backward) ("State 2-10) and the first electrode holder 35-1 is rendered "ON" to hold the electrode 31, whereby the state capable of performing the normal discharge as shown in the above described Fig. 19 can return.

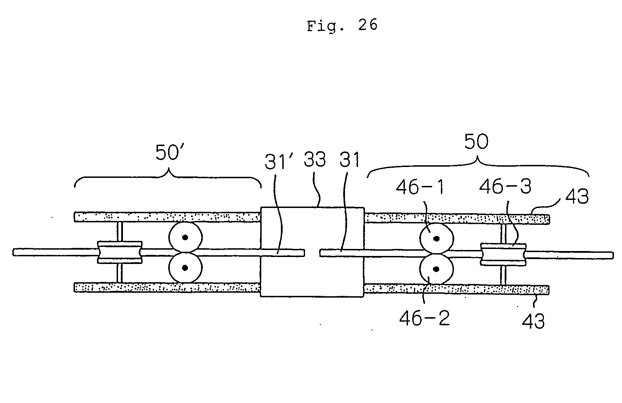

Fig. 26 is a schematic cross-sectional diagram (schematic view) showing another mode example of the discharge device relating to the second embodiment of the present invention. In this mode, the same numerals are affixed to the same or corresponding constituting elements as in the mode as shown in Fig. 14 and their detailed explanation is omitted. The discharge device as shown in Fig. 26 is also constituted of a pair of bar electrodes 31 and 31' whose tips are separately opposed with a predetermined clearance (an optimum distance for discharge), a discharge vessel 33 which houses the opposed tips of the above described electrodes 31 and 31' and is filled with a liquid and electrode clearance adjustment mechanisms 50 and 50' which are installed on both sides of the discharge vessel 33 and hold and move the parts of both electrodes 31 and 31' protruded outwardly of the discharge vessel 33 in the same manner as in the discharge device of Fig. 14.

In Fig. 26, since each of the electrode clearance adjustment mechanisms 50 and 50' has the same shape and the structure, the electrode clearance adjustment mechanism 50 on the right will be explained. The electrode clearance adjustment mechanisms 50 is constituted by installing a pair of roller conveyors 46-1 and 46-2 which holds an electrode 31 from its upper and lower directions and a pair of roller conveyors 46-3 and 46-4 (not shown since the roller conveyor46-4 is installed in the inner side) which holds the electrode 31 in its right and left directions between support stands 43. The mechanism 50 accordingly securely holds the electrode 31 at two positions in the directions crossing at right angles. At least one of the conveyor rollers 46-1, 46-2, 46-3 and 46-4 is connected to a driving mechanism, and when the rotation and stopping of the roller conveyers are controlled by driving this driving mechanism, the clearance between both electrodes 31 and 31'can be adjusted to any distance by moving the electrode 31 forward or backward. Further, microadjustment control is also possible. In other words, by two sets of the roller conveyers 46-1, 46-2 and 46-3 and 46-4, holding of the electrode 31 and the clearance adjustment between the electrodes 31 and 31' can be simultaneously performed.

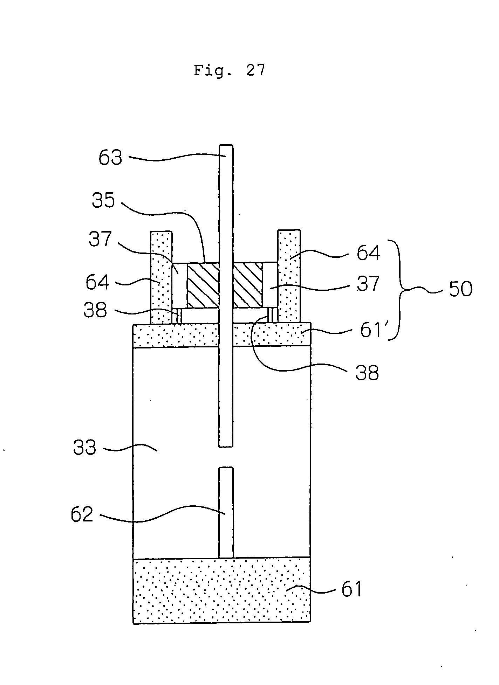

Fig. 27 is a schematic cross-sectional diagram (schematic view) showing another mode example of the discharge device relating to the second embodiment of the present invention. In this mode, the same numerals are affixed to the same or corresponding constituting elements as in the mode as shown in Fig. 14 and their detailed explanation is omitted. In the discharge device of the mode as shown in Fig. 27, inside between upper and lower support stands 61 and 61' is used as a discharge vessel 33 which is filled with a liquid, and an electrode 62 (the lower fixed electrode) is rendered protruded from the lower support stand 61 in the vertical upward direction. Further, above the electrode 62, the opposed other electrode 63 (the upper movable electrode) penetrating the upper support stand is arranged slidably in the upward and downward directions. Holder support members 64 are arranged on the upper support stand 61', and a cylinder 37 is installed movably upward and downward on the opposed inner side of the holder support members 64, and an electrode holder 35 composed of a toroidal rubber holder is integrally fixed on the opposed inner side of this cylinder 37 to hold and lift the electrode 63 upward. By this constitution, both electrodes 62 and 63 are arranged in such a manner that their tips are separately opposed with a predetermined clearance (an optimum distance for discharge). This discharge device is usable when both electrode 62 and 63 are installed in the upward and downward directions (preferably in the vertical direction) and is of the type of adjusting the electrode 63 on the upper side alone and fixing the electrode 62 on the lower side. In this mode, an electrode clearance adjustment mechanism 50 is constituted by a set of the cylinder 37 and the electrode holder 35 which holds and moves the part of the electrode protruded outwardly of the upper side of the discharge vessel 33. As the cylinder 37, a cylinder of taking two positions by protruding the shaft 38 downward or withdrawing it upward is sufficient, and a cylinder having a shaft 38 having a structure of taking two positions by protruding the shaft 38 downward or upward may be used. In the following explanation, the state of protruding the shaft 38 downward is taken as "ON", and the state of withdrawing the shaft 38 or protruding it upward is taken as "OFF".

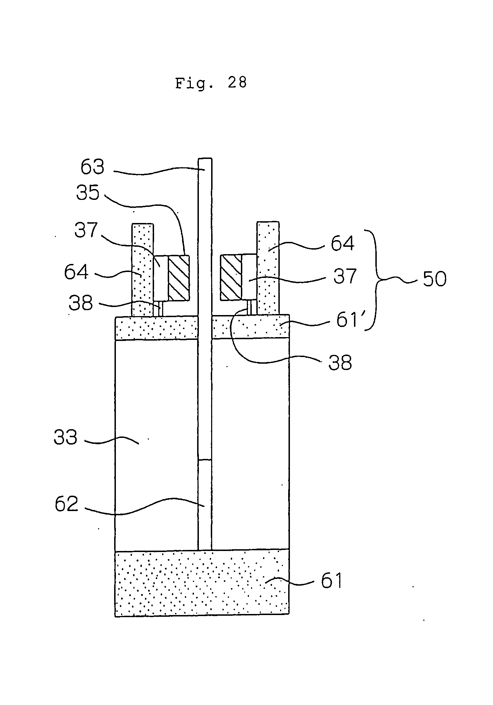

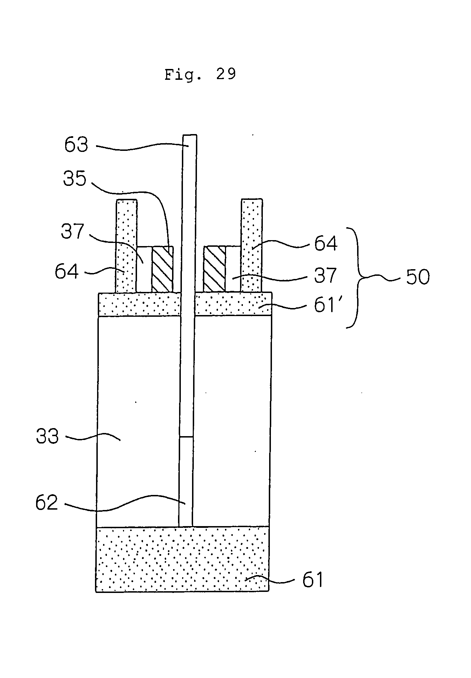

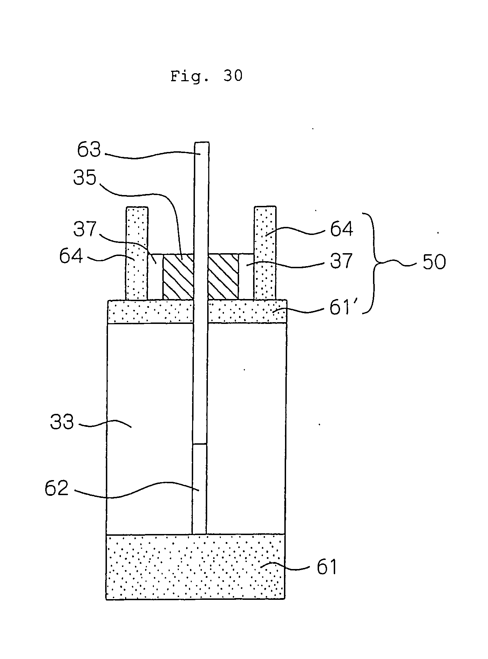

Fig. 27 shows the normal discharge state of the discharge device relating to the present invention. The electrode holder 35 and the cylinder 37 are both in the "ON" state of protruding the shaft 38 downward, and the cylinder 37 and the electrode holder 35 are held in a floating state from the upper support stand 61'. By applying a voltage of the dielectric breakdown voltage of the liquid in the discharge vessel 33 or higher between the electrodes 62 and 63 to perform discharge in this state, enormous shock waves and the like are generated and by them, scales, rust and the like adhering to the inside of the discharge vessel 33 can be fragmented and removed or adhesion of scales, rust and the like to the inside of the discharge vessel 33 can be prevented. When the clearance between the electrodes 62 and 63 is broadened by both the wastage of the electrodes and sliding of the electrodes due to the repulsion force on repetition of discharge, discharge is stopped, and the electrode holder 35 is rendered "OFF" as shown in Fig. 28 and releases the electrode 63. Then, the electrode 63 falls by gravity to make its tip abut to the tip of the lower electrode 62. Next, as shown in Fig. 29, the cylinder 37 is render "OFF" to lower the cylinder 37 and the electrode holder 35 to the upper side of the upper support stand 61'. Then, as shown in Fig. 30, the electrode holder 35 is rendered "ON" to hold the electrode 63, and then the cylinder 37 is rendered "ON" again to protrude the shaft 38 downward, whereby the state as shown in Fig. 27 returns to lift the electrode 63 upward. The clearance between both electrode 63 and 62 comes to the same length as the length of protrusion of the shaft 38 of the cylinder 37. Thus, when the length of protrusion of the shaft 38 is previously adjusted to a specified length, the clearance between both electrodes 62 and 63 can be set at an appropriate clearance for discharge.

In the mode as shown in Fig. 27, the electrode 62 on the lower side is of the fixed type and when wastage of the electrode 62 on the lower side proceeds, its replacement operation is complicated. However, when the rate of electrode remarkably differs between an anode and a cathode, by using the electrode whose rate of wastage is higher as the electrode 63 on the upper side, the maintenance of the discharge device can be simply conducted.

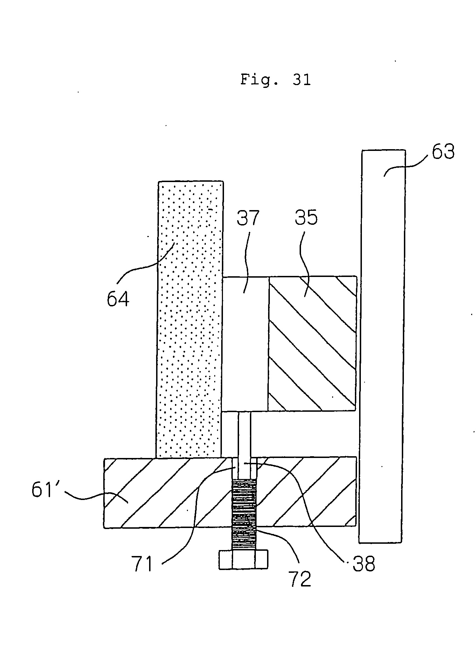

Furthermore as shown in Fig. 31, a mechanism of adjusting the abutting position of the shaft may be constituted by penetrating a hole 71 for housing the shaft 38 of the cylinder 37 through the side of the upper support stand 61', inserting a screw 72 movable upward and downward from the lower side of the hole 71 and making the tip of the shaft 38 abut to the lower end of this hole 71 (the upper end of the screw 72 movable upward and downward), whereby the clearance between both electrodes 62 and 63 can be arbitrarily and simply set.

In connection with the first and second embodiments of the present invention, various modes have been explained above but the present invention is not limited to the above described modes and many variations are possible within the scope of the technical thought as described in the claims, the specification and the drawings. Further, as far as the action and effect of the present invention are brought about, the shapes, structures and materials which are not described in the specification and the drawings are within the scope of the technical thought of the present invention. For example, it goes without saying that various changes in the shape and structure of the discharge vessel and electrodes, the discharge method and the like are possible and in short, any discharge device that has a pair of electrodes installed at the part capable of discharging may be used in the present invention. The shape, structure and number of the electrode holder which can hold and release the electrodes are not particularly limited, and further the shape, structure and number of the cylinder which can move the electrode holder are not particularly limited, and furthermore the stopper which can regulate the range of movement of the electrode holder is not particularly limited.

### INDUSTRIAL APPLICABILITY

According to the discharge device relating to the first embodiment of the present invention, the shock-absorbing mechanism can reduce sliding between an electrode holding part and an electrode and reduce the frequency of adjustment of the electrode clearance to economizes the time and cost of the adjustment. Further, the shock-absorbing mechanism exhibits the effect even when it is installed on any one of the electrodes, and thus the device structure as well is simple and its maintenance is easy. Furthermore, by contriving the cross-sectional shape and arrangement of the constituting parts getting enormously shocked, the durability of the device can be increased even with inexpensive materials, and the device cost and the maintenance cost can be reduced.

Further, according to the discharge device relating to the second embodiment of the present invention, the adjustment of the electrode clearance with good precision can be performed, and thus stabilized discharge can be continuously conducted. Furthermore, the adjustment of the electrode clearance can be performed without moving the discharge device as such from installed site thereof and by automatic control if required, and accordingly the adjustment of the electrode clearance does not take a lot of time and trouble.

## Claims

1. A discharge device having a pair of electrodes, at least one of said pair of electrodes having a shock-absorbing mechanism which absorbs or lessens the shock by discharge.

2. The discharge device of claim 1, wherein the shock-absorbing mechanism is constituted by arranging the pair of electrodes in series in the vertical direction and rendering the electrode on the upper side movable in the vertical upward direction.

3. The discharge device of claim 1, wherein the shock-absorbing mechanism is constituted by forming a flexed part on the electrode.

4. The discharge device of claim 3, wherein a spirally flexed part is formed on the electrode.

5. The discharge device of claim 1, wherein the shock-absorbing mechanism is constituted of a shock-absorbing material.

6. The discharge device of claim 5, wherein the shock-absorbing mechanism is constituted of an elastic shock-absorbing material having an ability to absorb a shock by deformation and, simultaneously, shape restorability.

7. The discharge device of claim 5 or claim 6, wherein the shock-absorbing mechanism is constituted by holding at least one of the pair of electrodes by an electrode holding member having an electrode holding part formed of a shock-absorbing material.

8. The discharge device of claim 5 or claim 6, wherein the shock-absorbing mechanism is constituted by connecting the opposed tips of the pair of electrodes with an elastic material having insulation properties and, simultaneously, shape restorability.

9. The discharge device of claim 5 or claim 6, wherein the shock-absorbing mechanism is constituted in a manner such that at least one of the pair of electrodes is constituted of an electrode support part and an electrode tip, and the electrode support part is connected to the electrode tip with an elastic material having shape restorability.

10. The discharge device of claim 9, wherein the elastic material is an electrically conductive material.

11. The discharge device of claim 9 or claim 10, wherein the electrode support part and the electrode tip are electrically connected with a conductor.

12. The discharge device of claim 5 or claim 6 having a discharge vessel and a pair of electrodes, one end of the electrode being arranged in the discharge vessel, other end of the tip of the electrode being arranged to be protruded outwardly of the discharge vessel, the shock-absorbing mechanism being constituted by holding at least one of the pair of electrodes by an electrode holding member and installing a shock-absorbing material between the electrode holding member and the discharge vessel.

13. The discharge device of any one of claim 1 to claim 12, wherein at least part of the constituting parts is constituted of a constituting part having an approximately polygonal cross-sectional shape having an approximately streamlined or acute angular part.

14. A discharge device having a pair of electrodes and an electrode clearance adjustment mechanism which is constituted by attaching to at least one of said electrodes, an electrode holder to hold and release the electrode, a driving mechanism to move the electrode holder and a stopper to regulate the movement position of the electrode holder, and which functions to adjust the spacing distance from the other electrode by moving the electrode held by the electrode holder to the position regulated by the stopper.

15. The discharge device of claim 14, wherein a plurality of sets of an electrode holder and a driving mechanism to move the electrode holders are arranged and the electrode clearance adjustment mechanism allows the plurality of electrode holders to hold and release the electrodes at a plurality of positions to move the electrodes.

16. A discharge device having a pair of electrodes installed in series in the upward and downward directions and an electrode clearance adjustment mechanism which is constituted of an electrode holder to hold and release the electrode installed on the upper side and a driving mechanism to allow the electrode holder to ascend in the upward direction to a predetermined distance, and which functions to separate the electrode on the upper side from the other electrode on the lower side to the predetermined distance by releasing the electrode holder to allow the electrode on the upper side to descend by gravity to make it abut to the other electrode installed on the lower side, and then holding the electrode on the upper side by the electrode holder to allow the electrode holder to ascend to a predetermined distance.

17. A discharge device having a pair of electrodes and an electrode clearance adjustment mechanism which is constituted by attaching to at least one of said electrodes, a roller conveyor to hold and feed the electrode and a driving mechanism to drive the roller conveyor, and which functions to adjust the spacing distance of the electrode from the other electrode by moving the electrode held by the roller conveyor.

18. The discharge device of any one of claim 14 to claim 17, wherein the driving mechanism is driven by a liquid pressure or a gas pressure.

19. The discharge device of any one of claim 1 to claim 18, which is a discharge device to be used in a liquid which performs discharge in the liquid to fragment scales and the like in liquid passage piping by shock waves to be generated by the discharge.
